(19) Europäisches Patentamt
European Patent Office
Office européen des brevets

(11) Veröffentlichungsnummer: **0 212 562 B1**

(12) **EUROPÄISCHE PATENTSCHRIFT**

(45) Veröffentlichungstag der Patentschrift: **15.07.92**

(51) Int. Cl.$^5$: **D06P 3/54**, D06P 1/18, C09B 67/22

(21) Anmeldenummer: **86111180.5**

(22) Anmeldetag: **12.08.86**

Die Akte enthält technische Angaben, die nach dem Eingang der Anmeldung eingereicht wurden und die nicht in dieser Patentschrift enthalten sind.

(54) **Verfahren zum Färben von Polyesterfasern feinen Titers.**

(30) Priorität: **24.08.85 DE 3530339**

(43) Veröffentlichungstag der Anmeldung:
**04.03.87 Patentblatt 87/10**

(45) Bekanntmachung des Hinweises auf die Patenterteilung:
**15.07.92 Patentblatt 92/29**

(84) Benannte Vertragsstaaten:
**DE FR GB IT**

(56) Entgegenhaltungen:
**DE-A- 3 216 788**
**DE-A- 3 345 357**
**FR-A- 2 372 270**
**US-A- 3 347 572**

(73) Patentinhaber: **HOECHST AKTIENGESELLSCHAFT**
**Postfach 80 03 20**
**W-6230 Frankfurt am Main 80(DE)**

(72) Erfinder: **Kühn, Reinhard**
**Heinrich-Bleicher-Strasse 39**
**W-6000 Frankfurt am Main 50(DE)**

**EP 0 212 562 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft ein Verfahren zum Färben von Textilmaterialien aus feintitrigen Polyester(PES)-Fasern mit einem Titer von kleiner als 0,1 den (< 0,011 tex) sowie gegebenenfalls einem Gehalt bis maximal 40 % Gew.-% an Polyurethan (PUR) in tiefen schwarzen, marineblauen oder schwarzbraunen Farbtönen nach der Ausziehmethode mit Gemischen von Dispersionsfarbstoffen aus je einer oder mehreren Blau-, Gelb- und Rot-Komponenten.

Für das Erzeugen der eingangs genannten Farbtöne werden in der Regel Gemische aus blauen, gelben und roten Dispersionsfarbstoffen eingesetzt, wobei hinsichtlich des einen oder anderen Farbanteils der Mischung auch mehrere solcher Einzelkomponenten, z.B. zwei unterschiedliche Blaukomponenten, zur Anwendung gelangen können. Farbstoffmischungen auf der zuvor erwähnten Basis sowie in geeigneter Zusammensetzung zum Färben von Schwarz und Marineblau sind wegen des allseitigen Bedarfs schon fertig formuliert im Handel erhältlich.

Das Färben von Polyesterfasern mit einem Titer von größer als 0,1 den (>0,011 tex) zu Schwarz-, Marineblau- oder tiefen Braunnuancen mit Dispersionsfarbstoffen bereitet für den Fachmann an sich keine Schwierigkeiten und ist in der Praxis hinreichend bekannt.

In neuerer Zeit sind außerdem Polyesterfasern mit einem Titer von kleiner als 0,1 den auf den Markt gekommen, die färbereitechnisch einige Besonderheiten aufweisen. Für das Verständnis der nachfolgenden Aussagen auf diesem Sachgebiet sei zunächst einmal festgehalten, daß bereits Fasern mit Titer 0,1 den und darunter als feintitrig aufgefaßt werden.

Während nun aber - wie schon früher gesagt - im Falle von Polyesterfasern mit einem Titer von über 0,1 den für das Färben vor allem von tiefen Nuancen noch keine unüberwindlichen Hindernisse auftreten, wenn sie zur Einstellung der obengenannten dunklen Farbtöne mit den diesbezüglichen konventionellen Mischungen von Dispersionsfarbstoffen gefärbt werden sollen, so lassen sich hingegen auf Polyesterfasern mit einen Titer von kleiner als 0,1 den unter Einsatz dieser angeführten üblichen Schwarzmischungen auch bei geänderten Verfahrensbedingungen einwandfreie Färbungen zu einem satten, blumigen Schwarz nicht mehr erreichen. Die gegenwärtig zugänglichen, vorgefertigten Schwarz- bzw. Marineblau-Mischungen auf der Grundlage je einer Blau-, Gelb- und Rot-Komponente ergeben in dieser Hinsicht bestenfalls schmutzige Anthrazitcolorierungen. Die hier aufgezeigten Probleme steigen mit abnehmendem Titer, d.h. wachsender Faserfeinheit, sogar an.

Ein weiteres eigenständiges Merkmal von Textilmaterial aus den genannten Typen von PES-Feintiterfasern ist dessen für spezielle Zwecke häufig vorgesehener, zusätzlicher Gehalt an Polyurethan, der es dann nicht mehr erlaubt, ein derartiges Substrat bei Temperaturen von 130 ° C und höher zu färben, so wie es die Maßgaben für die Fixierung der meisten von den bekannten Farbstoffmischungen dieser Gattung eigentlich erfordern. Aber selbst unter diesen für das nämliche Fasergut extremen thermischen Bedingungen erzielt man mit den herkömmlichen Schwarzmischungen kein tiefes Schwarz auf einer solchermaßen modifizierten Ware.

Unter den gegebenen Verhältnissen war somit kein mit der Applikation von Farbstoffen beschäftigter Textilveredler bis jetzt in der Lage, auf Polyesterfasern mit einem Titer von 0,04 den (0,0044 tex) sowie aufgrund von durch einen möglicherweise vorhandenen PUR-Gehalt veränderten Eigenschaften bei Anwendung der in der Praxis verfügbaren Schwarzmischungen die erstrebte Farbtiefe zu realisieren.

Feintiterfasern vom beschriebenen Charakter finden indessen hauptsächlich für Wildlederimitate Verwendung, auf denen dunkle Nuancen besonders wichtig und in erster Linie gefragt sind.

Im Hinblick auf das vorstehend dargelegte Bedürfnis bestand die für die vorliegende Erfindung zu lösende Aufgabe also darin, ein Verfahren zu entwickeln, gemäß dem Polyesterfasern mit einem Titer von kleiner als 0,1 den mit Dispersionsfarbstoffmischungen zu tiefem Schwarz, Marineblau oder Braun gefärbt werden können, wobei einschränkend zu berücksichtigen war, daß eine Färbetemperatur von 125 ° C nicht überschritten werden durfte.

Es wurde nun gefunden, daß es gelingt, auf Textilmaterial aus Polyesterfasern mit einem Titer von kleiner als 0,1 den sowie gegebenenfalls einem Polyurethangehalt Ausziehfärbungen in den gesuchten tiefen Nuancen von Schwarz, Marineblau oder Schwarzbraun zu erhalten, wenn man auf Basis einer additiven Mischung zusammen mit zur Trichromie befähigten gelben und roten Dispersionsfarbstoffen erfindungsgemäß als Blaukomponenten Dispersionsfarbstoffe der nachstehend angegebenen allgemeinen Struktur

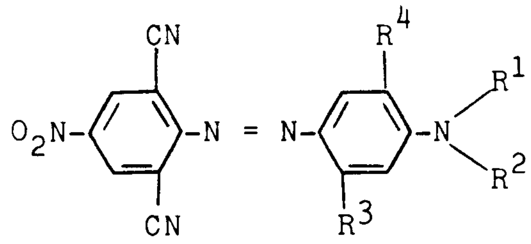

in welcher

$R^1$ und $R^2$ unabhängig voneinander Ethyl oder n-Propyl bedeuten,

$R^3$ Methyl, Ethyl, n-Propyl, Methoxy, Ethoxy oder den Rest -NH-CO-Alk darstellt, worin "Alk" Methyl, Ethyl oder n-Propyl sein kann, und $R^4$ für Wasserstoff, Methyl, Methoxy oder Ethoxy steht, mit der Maßgabe, daß $R^4$ Wasserstoff ist, wenn $R^3$ den Rest -NH-CO-Alk symbolisiert,

in Kombination miteinander einsetzt und aus wäßrigem Medium bei Temperaturen bis maximal 125 °C auf die Faser aufbringt.

Blaue Dispersionsfarbstoffe bzw. Mischungen davon mit der oben gezeigten Struktur sind bekannt. In den deutschen Offenlegungsschriften DE-Al-30 09 635, DE-Al-32 16 788, DE-Al-32 34 186 sowie DE-Al-33 47 572 sind Verfahren zum Färben von herkömmlichen Polyesterfasern beschrieben, bei denen eine Farbstoffmischung aus blauen Dispersionsfarbstoffen eingesetzt und im Gegensatz zur vorliegenden Erfindung vorzugsweise in Anwesenheit eines Carriers gearbeitet wird. Die genannten Offenlegungsschriften geben jedoch keinen Hinweis auf eine Auswahl geeigneter Blaukomponenten für Trichromiefärbungen von Polyester-Feintiterfasern.

Die speziellen Blaufarbstoffe werden für die vorliegende Erfindung in Form von Mischungen verwendet, weil die separaten Einzelfarbstoffe sich für die vorgesehene Aufgabe nicht allenthalben als geeignet erwiesen haben.

Im Rahmen der Blaukomponenten aus den Dispersionsfarbstoffen der formelmäßig angegebenen Struktur bewegt sich entsprechend dem beanspruchten Verfahren der Anteil der Einzelfarbstoffe zwischen 25 und 75 Gewichtsprozent.

Unter denselben Voraussetzungen sind auch Gemische aus mehreren, mindestens zwei unterschiedliche Dispersionsfarbstoffe enthaltenden Kombinationen solcher Blaukomponenten für die Belange dieser Erfindung von Bedeutung.

Der Gewichtsanteil dieser Blaukomponenten aus den zugrundeliegenden Dispersionsfarbstoffen obiger Struktur innerhalb der gesamten Zusammensetzung für die additive Farbmischung beträgt in den hier zur Diskussion stehenden Färberezepten 15 bis 80 Prozent.

Als Gelbkomponenten für das erfindungsgemäße Färben kommen vorzugsweise Dispersionsfarbstoffe der folgenden Formeln - einzeln oder in Kombination miteinander - in Betracht:

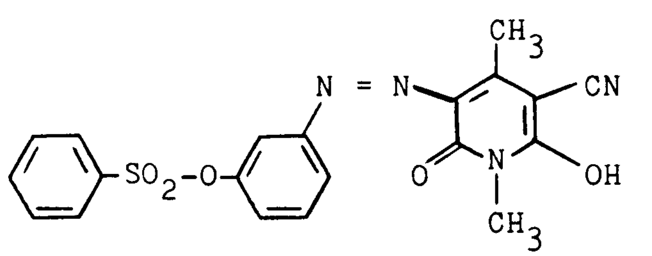

(I)

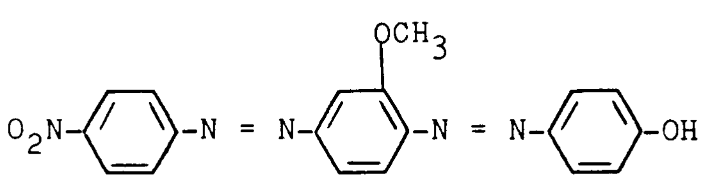

(II)

Diese gelben Dispersionsfarbstoffe der Formeln (I) und/oder (II) werden in den Färberezepten nach der Erfindung in Mengen von 10 bis 30 Prozent, bezogen auf das Gewicht der gesamten Zusammensetzung für die additive Farbmischung, eingesetzt.

Als Rotkomponenten werden beim beanspruchten Verfahren vorzugsweise Dispersionsfarbstoffe der folgenden Formeln - einzeln oder in Kombination miteinander - verwendet:

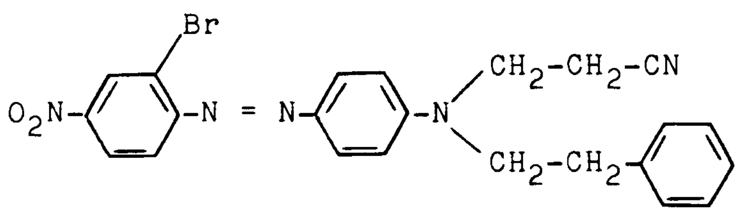

(III)

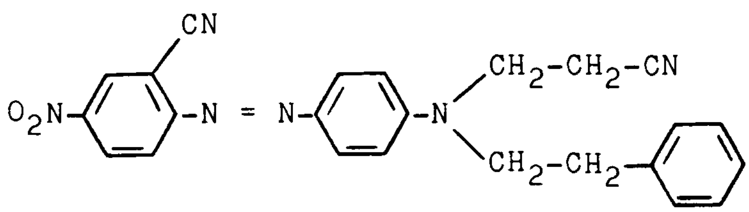

(IV)

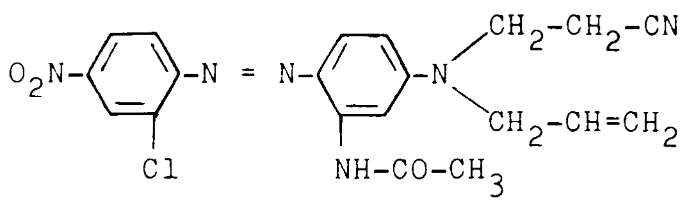

(V)

Diese roten Dispersionsfarbstoffe der Formeln (III) und/oder (IV) und/oder (V) sind in den Färberezepten nach der Erfindung in Anteilen von 15 bis 40 Prozent, bezogen auf das Gewicht der gesamten Zusammensetzung für die additive Farbmischung, enthalten.

Darüber hinaus können außer den Dispersionsfarbstoffen der Formeln (I) bis (V) zusätzlich noch andere Gelb-, Gelbbraun- und Rotmarken von unterschiedlichem chemischen Aufbauprinzip in den erfindungsgemäß verwendeten Farbmischungen vorhanden sein. Unabhängig davon bleibt hingegen die Auswahl der Dispersionsfarbstoffe für die Blaukomponenten streng auf die formelmäßig dargestellte Struktur beschränkt.

Die Durchführung des Färbeverfahrens selbst weicht kaum von der herkömmlichen HT-Färbetechnik ab. Man färbt das Textilgut bei Temperaturen bis maximal 125 ° C, vorzugsweise von 115 ° bis 120 ° C, für die Dauer von 60 bis 90 Minuten lang aus waßriger Flotte. Im Anschluß an den Ausziehvorgang folgt wie üblich eine zumeist reduktive Nachreinigung der gefärbten Ware zum Entfernen nicht fixierter Farbstoffanteile.

Auf die vorstehend erläuterte Weise erhält man ausschließlich auf Basis der erfindungsgemäßen Blaukomponenten von verhältnismäßig eng umrissener Struktur im Zusammenwirken mit geeigneten Gelb- und Rotkomponenten einwandfreie Schwarz-, Marineblau- oder Schwarzbraunnuancen auf den textilen Gebilden aus feintitrigen PES-Fasern, z.B. mit einem Titer von 0,04 den.

Ein solcher Befund in Bezug auf das erzielte färberische Ergebnis war für den Fachmann insofern überraschend, als die am vorliegenden trichromatischen System beteiligten Blaukomponenten Farbstoffe enthalten, deren Einsatz als Einzelfarbstoffe unter den Bedingungen des beanspruchten Verfahrens nicht den gewünschten Effekt liefert, welche jedoch in Form der Kombination, sogar bei den erfindungsgemäß vorgesehenen relativ niedrigen Temperaturen (115 ° bis 120 ° C), sich als Bestandteil der besprochenen additiven Farbmischung zur Colorierung eignen, obwohl sie sonst separat als Einzelfarbstoff lediglich als sogenannte HT-Färber, d.h. für die Applikation bei Temperaturen um 130 ° C bekannt sind.

Andererseits taugen nach Maßgabe dieser Erfindung in den Kombinationen der Blaukomponenten auch

Einzelfarbstoffe, die sonst als typische Carrier-Farbstoffe eingesetzt werden, welche sich aber bei alleiniger Verwendung als Blaufarbstoff für den Zweck der Erfindung als unbrauchbar erwiesen haben.

Die nachfolgenden Beispiele geben Aufschluß über vorteilhafte Mischungsverhältnisse von zur Trichromie befähigten Dispersionsfarbstoffen, sollen aber in dieser Hinsicht in keiner Weise als einschränkend angesehen werden.

Beispiel 1

Ein Gewirk aus "fine Denier"-Polyesterfasern (0,04 den) wird beim Flottenverhältnis von 1:15 in ein Färbebad eingebracht, welches aus 40° C warmem Wasser besteht und mittels Essigsäure/Na-Acetat auf pH 4,5 eingestellt ist. Als Dispergiermittel werden dieser Flotte noch 1 g/l eines löslichen, sulfogruppenhaltigen Polyesters gemäß deutscher Patentschrift DE-C3-25 08 472 zugegeben und das Textilgut wird mit der so angesetzten blinden Flotte unter den angegebenen Temperaturbedingungen in Kontakt gehalten.

Zur Erstellung einer Schwarznuance auf der Ware nach dem Trichromie-Prinzip ist eine additive Farbmischung vorgesehen, welche Dispersionsfarbstoffe nachfolgender Struktur in handelsüblicher Beschaffenheit sowie entsprechend den unten angegebenen Mengen (jeweils auf das Gewicht des trockenen Fasermaterials bezogen) enthält:

10 % einer Kombination aus 65 Gew.-Teilen des blauen Dispersionsfarbstoffes der Formel

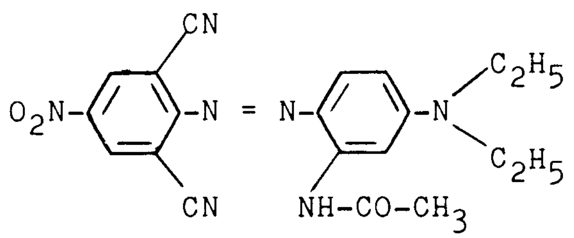

und

35 Gew.-Teilen des blauen Dispersionsfarbstoffes der Formel

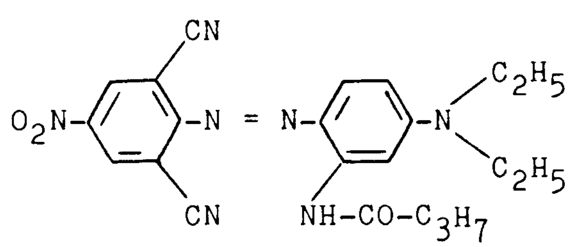

als Blaukomponente;

2 % des gelben Dispersionsfarbstoffes der Formel (I)

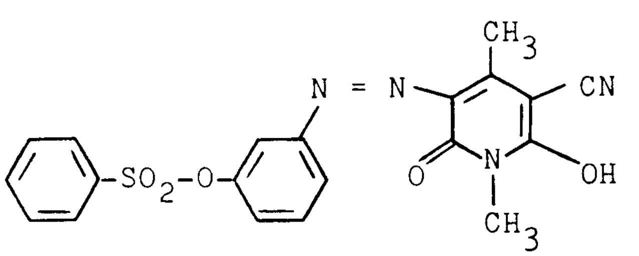

(I)

4 % des gelben Dispersionsfarbstoffes der Formel (II)

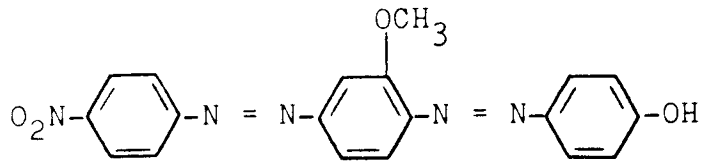

(II)

als Gelbkomponenten;
4 % des roten Dispersionsfarbstoffes der Formel (III)

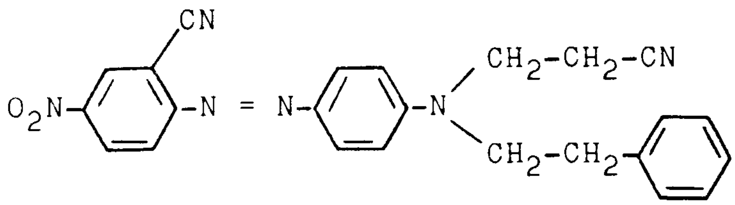

(III)

4 % des roten Dispersionsfarbstoffes der Formel (IV)

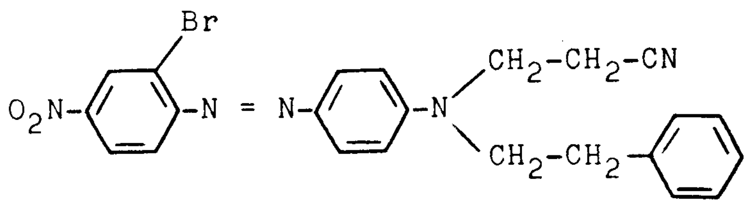

(IV)

als Rotkomponenten.

In einem separaten Ansatzgefäß werden diese Farbstoffe gemeinsam in Wasser von 40 °C dispergiert und diese Dispersion wird nach ca. 5 bis 10 Minuten Vorlaufzeit dem mit dem Fasermaterial beschickten Bad zugesetzt. Man heizt sodann nach ca. 5 Minuten Flotte samt Ware innerhalb von 30 Minuten auf 120 °C auf und bringt bei dieser Temperatur die Färbung im Verlauf von 90 Minuten zu Ende.

Danach läßt man das gefärbte Textilgut abkühlen und reinigt es mit einem wäßrigen Bad von 80 °C unter Zusatz von

5 $cm^3$/l Natronlauge (32,5 %ig) und

1 g/l Hydrosulfit (Dithionit)

etwa 10 Minuten lang nach. Nach dem abschließenden Spülen mit Wasser wird die so behandelte Ware getrocknet.

Man erhält eine volle Schwarzfärbung des Gewirkes.

Führt man die Färbung nach der obigen Vorschrift bei unverändertem Farbstoffeinsatz der verschiedenen Farbanteile der Gesamtmischung, jedoch zum Unterschied von zuvor nur allein mit dem ersten Dispersionsfarbstoff der Blaukomponente in derselben Menge (10 %) wie die vorgängig genutzte Kombination aus den beiden Blaufarbstoffen durch, dann erhält man als Färbung auf dem Gewirke anstelle eines Schwarz lediglich ein stumpfes Anthrazit.

Beispiel 2

Ein non-woven-Textil aus einer Feintiter-Polyesterfaser (0,06 den) wird wie in Beispiel 1 beschrieben, jedoch bei 115 °C gefärbt, und zwar mit einem Gemisch aus den folgenden Farbstoffen (in handelsüblicher Beschaffenheit) in den jeweils unten angegebenen Mengen:

10 % einer Kombination aus 55 Gew.-Teilen des blauen Dispersionsfarbstoffes der Formel

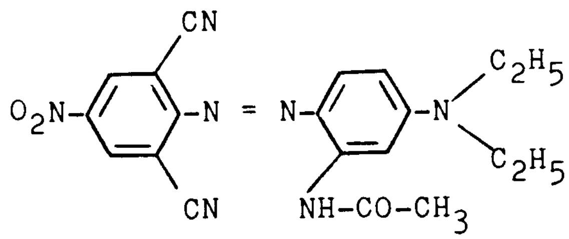

und

45 Gew.-Teilen des blauen Dispersionsfarbstoffes der Formel

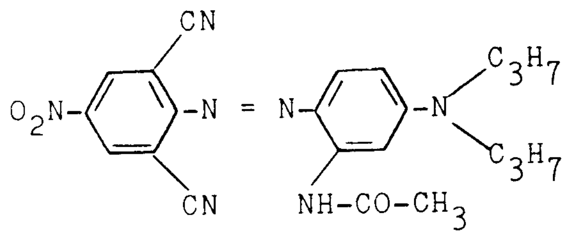

als Blaukomponente,
2 % des gelben Dispersionsfarbstoffes der Formel (II) aus Beispiel 1 sowie
3 % des roten Dispersionsfarbstoffes der Formel (III) aus Beispiel 1.

Nach dem Trocknen erhält man auf der Ware eine tiefe Marineblaufärbung.

Beispiel 3

Ein Gewebe aus Feintiter-Polyesterfaser (0,04 den) wird wie in Beispiel 1 gefärbt, jedoch mit einem Gemisch aus den folgenden Farbstoffen (in handelsüblicher Beschaffenheit) und Farbstoffmengen in den jeweils unten angegebenen Mengen:
6 % einer Kombination aus 62 Gew.-Teilen des blauen Dispersionsfarbstoffes der Formel

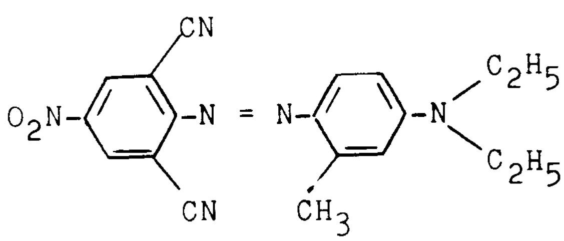

und

38 Gew.-Teilen des blauen Dispersionsfarbstoffes der Formel

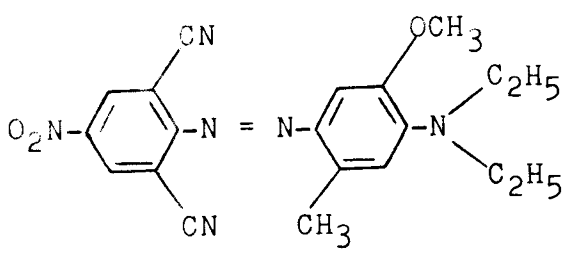

als Blaukomponente,
5 % des gelben Dispersionsfarbstoffes der Formel (II) aus Beispiel 1 sowie 2 % des gelben Dispersionsfarbstoffes der Formel (I) aus Beispiel 1 als Gelbkomponente, und
7 % des roten Dispersionsfarbstoffes der Formel (III) aus Beispiel 1 als Rotkomponente.

Nach dem Trocknen erhält man auf der Ware eine Braunfärbung.

**Patentansprüche**

**1.** Verfahren zum Färben von Textilmaterial aus feintitrigen Polyesterfasern mit einem Titer von kleiner als 0,1 den (< 0,011 tex) sowie gegebenenfalls einem Gehalt bis maximal 40 Gew.-% an Polyurethan in tiefen schwarzen, marineblauen oder schwarzbraunen Farbtönen nach der Ausziehmethode mit Gemischen von Dispersionsfarbstoffen aus je einer oder mehreren Blau-, Gelb- und Rot-Komponenten, dadurch gekennzeichnet, daß man als Blaukomponenten für die additive Farbmischung des trichromatischen Systems eine Kombination aus mindestens zwei Dispersionsfarbstoffen der nachstehend angegebenen allgemeinen Struktur

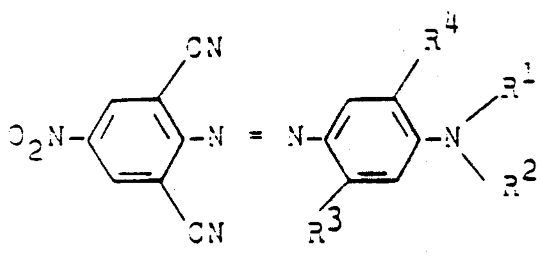

in welcher

| | |
|---|---|
| $R^1$ und $R^2$ | unabhängig voneinander Ethyl oder n-Propyl bedeuten, |
| $R^3$ | Methyl, Ethyl, n-Propyl, Methoxy, Ethoxy oder den Rest -NH-CO-Alk darstellt, worin "Alk" Methyl, Ethyl oder n-Propyl sein kann, und |
| $R^4$ | für Wasserstoff, Methyl, Methoxy oder Ethoxy steht, mit der Maßgabe, daß $R^4$ Wasserstoff ist, wenn $R^3$ den Rest -NH-CO-Alk symbolisiert, |

einsetzt und aus wäßrigem Medium bei Temperaturen bis maximal 125 °C auf die Faser aufbringt.

**2.** Verfahren nach Anspruch 1, dadurch gekennzeichnet, daß sich im Rahmen der Blaukomponenten der Gewichtsanteil der Einzelfarbstoffe der angegebenen Struktur für den Fall, daß Kombinationen daraus vorliegen, zwischen 25 % und 75 % bewegt.

**3.** Verfahren nach Anspruch 1 oder 2, dadurch gekennzeichnet, daß der Gewichtsanteil der Blaukomponenten aus den zugrundeliegenden Dispersionsfarbstoffen der angegebenen Struktur innerhalb der gesamten Zusammensetzung für die additive Farbmischung 15 % bis 80 % beträgt.

**4.** Verfahren nach mindestens einem der Ansprüche 1 bis 3, dadurch gekennzeichnet, daß man als Gelbkomponenten Dispersionsfarbstoffe der nachstehend angegebenen Formeln

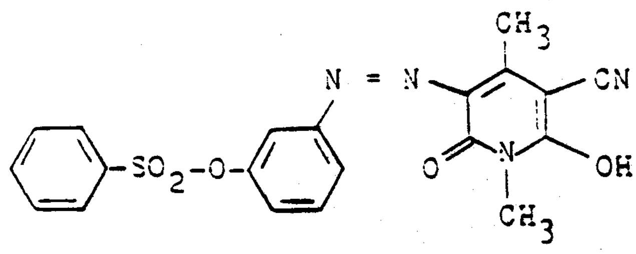

(I)

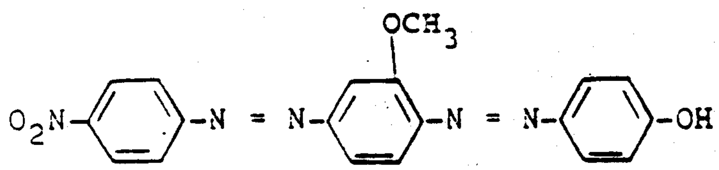

(II)

einzeln oder in Kombination miteinander einsetzt, und daß der Gewichtsanteil der Gelbkomponente aus den Farbstoffen der Formeln (I) und/oder (II) innerhalb der gesamten Zusammensetzung für die additive Farbmischung 10 % bis 30 % beträgt.

**5.** Verfahren nach mindestens einem der Ansprüche 1 bis 4, dadurch gekennzeichnet, daß man als Rotkomponente Dispersionsfarbstoffe der nachstehend angegebenen Formeln

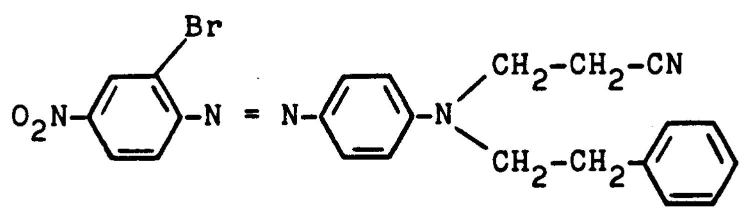

(III)

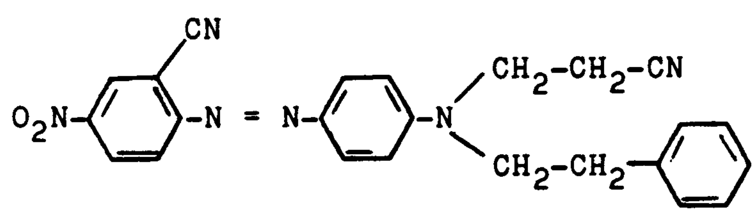

(IV)

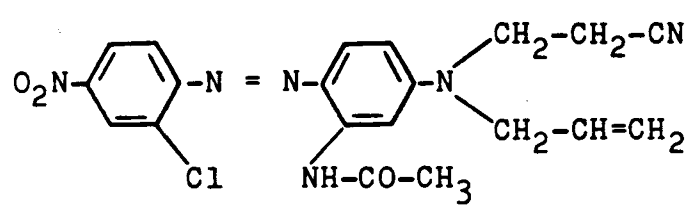

(V)

einzeln oder in Kombination miteinander einsetzt, und daß der Gewichtsanteil der Rotkomponente aus den Farbstoffen der Formeln (III) und/oder (IV) und/oder (V) innerhalb der gesamten Zusammensetzung für die additive Farbmischung 15 % bis 40 % beträgt.

**6.** Verfahren nach mindestens einem des Ansprüche 1 bis 5, dadurch gekennzeichnet, daß das Textilmateial 60 bis 90 Minuten bei 115 ° C bis 120 ° C gefärbt wird.

## Claims

1. A process for dyeing textile material made of fine-denier polyester fibers which have a linear density of less than 0.1 den (< 0.011 tex) and may contain polyurethane up to a maximum of 40% by weight in deep black, navy or blackish brown shades by the exhaust method with disperse dye mixtures composed of one or more of a blue, yellow and red component each, which comprises using, as blue components for the additive color mixture of the trichromatic system, a combination of at least two disperse dyes of the following general structure:

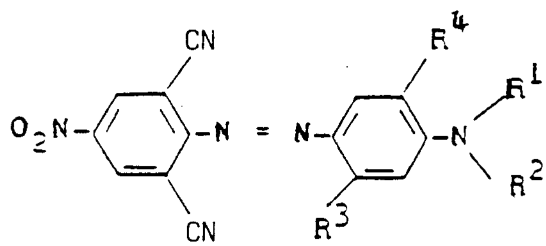

in which
   $R^1$ and $R^2$, independently of each other, denote ethyl or n-propyl,
   $R^3$ represents methyl, ethyl, n-propyl, methoxy, ethoxy or the radical -NH-CO-Alk, in which "Alk" can be methyl, ethyl or n-propyl, and
   $R^4$ stands for hydrogen, methyl, methoxy or ethoxy, with the proviso that $R^4$ is hydrogen when $R^3$ symbolizes the radical -NH-CO-Alk,
and effecting application to the fiber from an aqueous medium at temperatures up to a maximum of 125°C.

2. The process as claimed in claim 1, wherein for combinations of blue components the proportion by weight of individual dyes of the indicated structure varies between 25% and 75%.

3. The process as claimed in claim 1 or 2, wherein the proportion by weight of the blue components composed of the underlying disperse dyes of the indicated structure within the overall composition of the additive color mixture is 15% to 80%.

4. The process as claimed in at least one of claims 1 to 3, wherein the yellow components used are disperse dyes of the following formulae

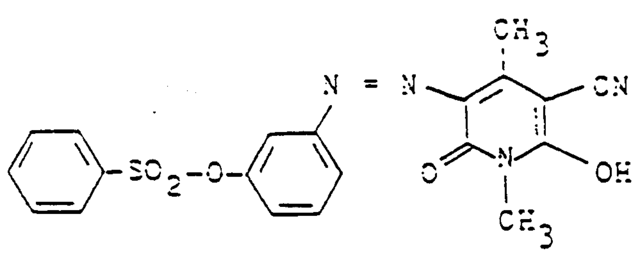

(I)

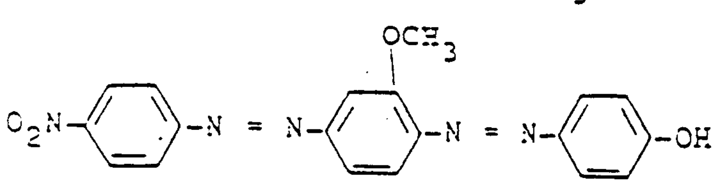

(II)

individually or in combination with each other, and the proportion by weight of the yellow component composed of the dyes of the formulae (I) and/or (II) within the overall composition of the additive color mixture is 10% to 30%.

5. The process as claimed in at least one of claims 1 to 4, wherein the red component used is composed of disperse dyes of the following formulae

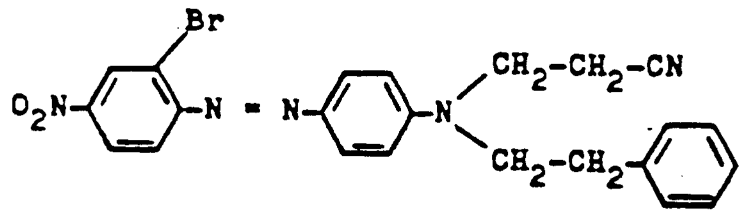

(III)

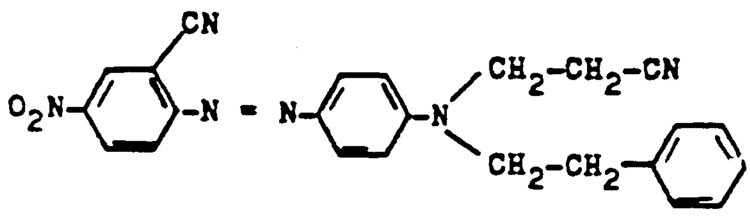

(IV)

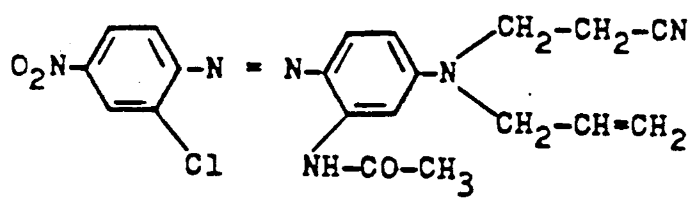

(V)

individually or in combination with one another, and the proportion by weight of the red component composed of the dyes of the formulae (III) and/or (IV) and/or (V) within the overall composition of the additive color mixture is 15% to 40%.

**6.** The process as claimed in at least one of claims 1 to 5, wherein the textile material is dyed at 115 ° C to 120 ° C for 60 to 90 minutes.

**Revendications**

**1.** Procédé destiné à la teinture de matériaux textiles constitués de fibres de polyester (PES) ayant un titre fin, inférieur à 0,011 tex (0,1 den), et contenant éventuellement jusqu'à un maximum de 40 % en poids de polyuréthanne (PUR), en des nuances profondes noires, bleu marine ou brun noir, par le procédé par épuisement, avec des mélanges de colorants de dispersion dont chacun comprend un ou plusieurs composants bleus, jaunes et rouges, caractérisé en ce qu'on utilise en tant que composants bleus pour le mélange colorant additif du système trichromatique une combinaison d'au moins deux colorants de dispersion ayant la structure générale indiquée ci-après

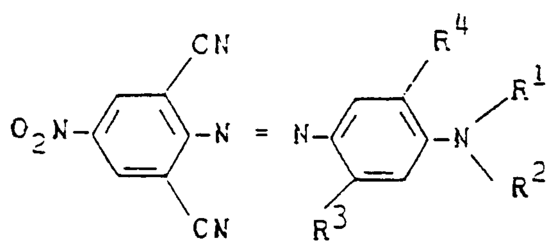

dans laquelle

$R^1$ et $R^2$, indépendamment l'un de l'autre, sont chacun le radical éthyle ou n-propyle,

$R^3$ est le radical méthyle, éthyle, n-propyle, méthoxy, éthoxy, ou le radical -NH-CO-Alk, où "Alk" peut être le radical méthyle, éthyle ou n-propyle, et

$R^4$ représente un hydrogène ou le radical méthyle, méthoxy ou éthoxy, du moment que $R^4$ est un

hydrogène quand $R^3$ symbolise le radical -NH-CO-Alk,

et on l'applique sur les fibres en milieu aqueux à des températures maximales de 125 ° C.

**2.** Procédé selon la revendication 1, caractérisé en ce que, dans le cadre des composants bleus, le pourcentage pondéral des colorants individuels ayant la structure indiquée est de 25 à 75 % dans le cas où il en résulte des combinaisons.

**3.** Procédé selon la revendication 1 ou 2, caractérisé en ce que le pourcentage pondéral des composants bleus constitués des colorants de dispersion ayant la structure indiquée est comprise entre 15 et 80 % dans le cadre de la composition globale du mélange colorant additif.

**4.** Procédé selon au moins l'une des revendications 1 à 3, caractérisé en ce qu'on utilise comme composants jaunes des colorants de dispersion ayant les formules ci-après :

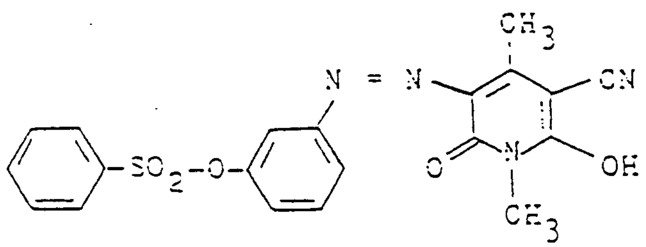

(I)

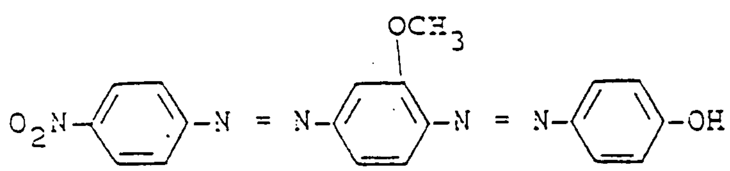

(II)

seules ou en combinaison l'un avec l'autre, et que le pourcentage pondéral du composant jaune constitué des colorants de formules (I) et/ou (II) est de 10 à 30 % dans le cadre de la composition globale du mélange colorant additif.

**5.** Procédé selon au moins l'une des revendications 1 à 4, caractérisé en ce qu'on utilise comme colorant rouge des colorants de dispersion ayant les formules ci-après :

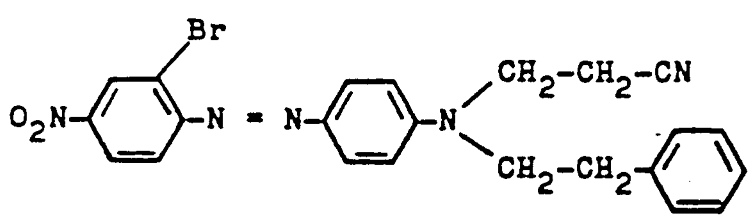

(III)

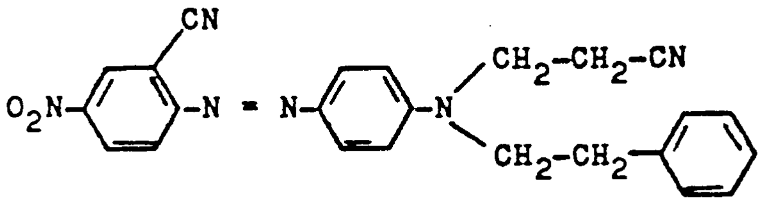

(IV)

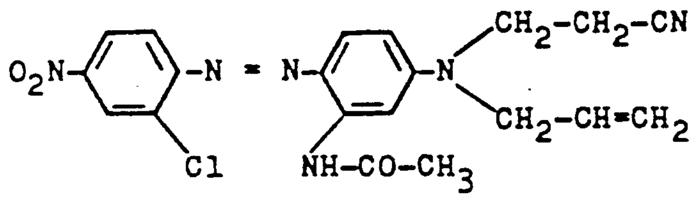

(V)

seules ou en combinaison les uns avec les autres, et que le pourcentage pondéral du composant rouge constitué des colorants de formules (III) et/ou (IV) et/ou (V) est de 15 à 40 % dans le cadre de la composition globale du mélange colorant additif.

**6.** Procédé selon au moins l'une des revendications 1 à 5, caractérisé en ce que le matériau textile est teint pendant 60 à 90 minutes à une température de 115 à 120 ° C.